# EUROPEAN PATENT APPLICATION

(11) **EP 4 748 763 A1**
(43) Date of publication of application: **27.05.2026**
(21) Application number: 24214142.2
(22) Date of filing: 20.11.2024
(51) Int. Cl.: B65G 65/44, B65D 88/72, B65G 69/08, B65G 27/32, B65G 27/34, B65D 88/66, B63B 27/28

(54) **STORAGE AND RECLAIM SYSTEM FOR BULK MATERIAL**

(71) Applicant: Macgregor Sweden AB, 400 40 Göteborg (SE)
(72) Inventor: WALLIN, Tomas, 749 44 Enköping (SE)
(74) Representative: Lind Edlund Kenamets Intellectual Property AB

(57) **Abstract**

The present invention relates to a storage and reclaim system (100) for bulk material (102) comprising an inclined support plate (112) for supporting the bulk material (102) and for assisting gravity induced feeding of the bulk material (102). One or more rotary vibrators (116) are connected to the support plate (112) via a respective bracket (140) and configured to transfer vibrational energy to the support plate (112) to induce a vibrational movement of the support plate (112). The bracket (140) comprises a support plate mounting surface (142) connected to the support plate (112) and having a length extension (L). The bracket (140) comprises a vibrator mounting surface (144) to which the rotary vibrator (116) is attached, whereby a centre of rotation (CR) of at least one rotary vibration element (116a) of the rotary vibrator (116) is located at distance (D) from the second major surface (112b) in a direction normal to the second major surface (112b). A ratio between the length extension (L) of the support plate mounting surface (142) and the distance (D) from the second major surface (112b) to the centre of rotation (CR) is in a range of 0,75 to 4,0. A vessel (200), a land-based storage (300) and a hopper (400) including system (100) are also provided. Moreover, a use of the system (100) for handling of bulk material (102) is also provided.

## Description

### Technical Field

The present invention relates to a storage and reclaim system for bulk material. The system comprises a bulk material holding space having a bottom portion provided with a discharge port. The invention also relates to a use of the system and to a vessel, a land-based storage and a hopper including the system.

### Background Art

Today a substantial amount of cargo is shipped around the globe using large naval vessels or ships capable of traveling long distances over open sea. Similarly, a substantial amount of cargo is shipped more moderate distances using inland water ways, such as rivers and lakes. The large amount of cargo consequently brings about that large amount of cargo will have to be handled and stored e.g. in conjunction to being reloaded.

When shipping bulk cargo or load, such as coal or ore, bulk naval vessels or ships dedicated for loading bulk cargo are commonly used due to their capability of loading bulk cargo. Bulk vessels are commonly equipped with large cargo holds which are covered by some form of hatch or cover which is opened during loading and unloading of the cargo concerned. When handling bulk cargo, cranes equipped with buckets or similar are commonly used to handle the cargo.

Similarly, large land-based storage facilities are commonly used for storing bulk cargo. In such facilities bulldozers or similar are often used to distribute, reload and unload the bulk cargo.

Moreover, bulk cargo may temporarily be stored and reloaded in so-called hopper systems.

However, more efficient reloading or unloading of bulk cargo may be effectuated by using so-called self-unloader systems, which for example may be installed in vessels or storage facilities. In self-unloader systems the bulk cargo is automatically unloaded from the vessel or cargo space through gates arranged at the bottom of the space or cargo hold. In self-unloader systems, the space used for holding the cargo is typically equipped with steep inclined sidewalls along which the bulk cargo slides towards the gates arranged at the bottom. From the gates, the bulk cargo is then typically transported away using conveyors, transporters, or feed screws.

In self-unloader systems the bulk cargo is prone to get stuck during unloading of the bulk cargo. There are several reasons for that the bulk cargo can get stuck during unloading. One reason resides in that the side walls of the space used for holding the cargo is not steep enough. Another reason is that the side walls of space used for holding the cargo exhibits a too high friction due to clogging or sticking of material. Yet another reason is that the bulk cargo forms walls when being unloaded. Yet another reason is that the bulk cargo forms arches e.g. over the gates. Yet another reason is that the material properties of the bulk cargo do not allow free flow due to high internal friction and for that reason arches e.g. over the gates. This means that the region closest to the gate may be emptied but the material forms a self-supporting arch above the gate, hence resulting in that the bulk cargo cannot easily be unloaded.

In order to reduce the above problems, it is common practice to use steep sidewalls and to employ the sidewalls with vibrators attached thereto. This arrangement reduces the risk of the bulk cargo getting stuck during unloading. However, other drawbacks typically arise when utilizing this approach.

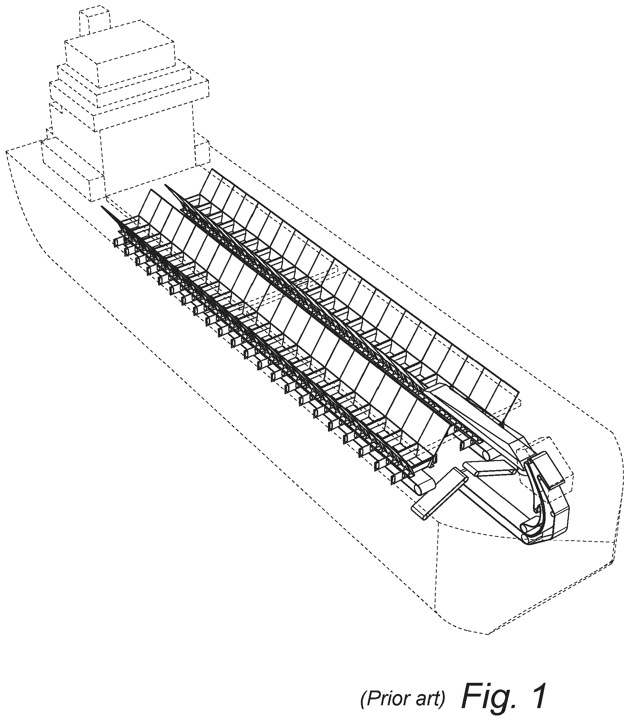

Fig. 1 schematically illustrates a partial perspective cross sectional view of a ship according to prior art. The depicted ship, mainly shown in phantom, has a deadweight tonnage of about 8600 tonnes and a gross load capacity of about 11300 cubic meters. More specifically, Fig. 1 illustrates the cargo hole of a bulk loader equipped with a self-unloader system. As can be seen in Fig. 1, the steep side walls of the cargo hole bring about that valuable space in the interior of the ship cannot be used for storing cargo at the sides of the ship as well as in the middle. Moreover, in order to not waste too much space, the ship has been equipped with two parallel sets of gates, one on the starboard side and one on the portside of the ship. The use of parallel gate sets results in that multiple sets of conveyors must be used below the gates. The use of multiple parallel conveyors results in that cross-conveyors, extending in a transversal direction of the ship are needed to feed the bulk cargo to the C-shaped conveyor used to lift and transfer bulk cargo out of the ship. The use of multiple conveyors is both costly and increases the number of moving parts, hence increasing maintenance, risk of malfunction and costly downtime.

Further, vibrators are attached to the steep sidewalls of the ship in Fig. 1. This arrangement of the vibrators results in undesired body sound or structure sound as well as premature material fatigue. A vibrator may induce as much as 400kN of centripetal force of which a major portion is absorbed by the sidewalls and the support structure. The vibrational energy from the vibrators being transferred to the sidewalls and the support structure will inevitably cause the sidewalls and the support structure to vibrate. Such vibrations will cause a significant amount of noise which result in risks for personnel operating the system. Further such vibrations require very rigid support structures or else the lifetime will be reduced owing from premature material fatigue. Such required very rigid support structures means that a lot of material will have to be used in the support structure in order to achieve a desired lifetime. Also, the attachment of the support structure to its surroundings, such as to a hull of a ship, must be very rigid in order to last over time. Also, in this regard, a lot of material will have to be used for attaching the support structure to its surroundings.

Similar or the same problems arise when utilising land-based self-unloader systems with steep sidewalls and vibrators and in hopper systems employed with steep sidewalls and vibrators.

EP 4 108 602 A1 suggests using less steep sidewalls in combination with a bottom support plate which is not rigidly fixed to the support structure. The bottom support plate is in turn provided with vibrators meaning that the bottom support plate may vibrate independently of the support structure.

However, there is still room for improvement when it comes to efficiently unloading or reloading of bulk cargo by using so-called self-unloader systems.

### Summary

When attaching a vibrator to a surface to be vibrated it is common practice to distribute the vibrational force exerted by the vibrator over a large area of the surface to be vibrated. This in order to not cause premature material fatigue in the material being vibrated. The conventional approach when attaching vibrators to a surface to be vibrated in self-unloader systems is to attach the vibrators via elongated beams having a length of about 2 m. This in order to not flex the material forming the surface to be vibrated. The inventor has realized that the storage and reclaim system of EP 4 108 602 A1, although being highly efficient, may not be capable of vibrating the support plate provided at the bottom portion of the bulk material holding space to satisfaction under some circumstances.

With the above in mind, it is an object of the present invention to provide an improved storage and reclaim system for bulk material as well as a use of the system and a vessel, a land-based storage and a hopper including the system.

Another object is to provide such a storage and reclaim system for bulk material which is more efficient in terms rapidly unloading bulk material.

Another object is to provide such a storage and reclaim system for bulk material which is capable of unloading more bulk material per unit time.

Another object is to provide such a storage and reclaim system for bulk material which is more efficient when it comes to completely or substantially completely emptying a bulk material holding space.

Another object is to provide such a storage and reclaim system for bulk material which simplifies unloading from the storage and reclaim system.

Another object is to provide such a storage and reclaim system for bulk material which allows for an improved handling of bulk material with high internal friction.

Another object is to provide such a storage and reclaim system for bulk material which reduces body sounds.

Another object is to provide such a storage and reclaim system for bulk material which reduces material fatigue of the system and surrounding components.

Another object is to provide such a storage and reclaim system for bulk material which occupies less space.

Another object is to provide such a storage and reclaim system for bulk material which reduces the number of auxiliary components used when unloading bulk cargo from the storage and reclaim system.

To achieve at least one of the above objects and also other objects that will be evident from the following description, a storage and reclaim system for bulk material having the features defined in claim 1 is provided according to the present inventive concept. A vessel including a storage and reclaim system for bulk material is provided according to claim 16. A land-based storage including a storage and reclaim system for bulk material is provided according to claim 17. A hopper including a storage and reclaim system for bulk material is provided according to claim 18. A use of a storage and reclaim system is provided according to claim 19. Preferred variations of the inventive concept will be evident from the dependent claims.

More specifically, according to a first aspect, there is provided a storage and reclaim system for bulk material comprising: a bulk material holding space having a bottom portion provided with a discharge port, wherein the bottom portion comprises an inclined support plate for supporting the bulk material, at a first major surface thereof, and for assisting gravity induced feeding of the bulk material towards the discharge port, a support structure supporting the support plate, and one or more rotary vibrators connected to the support plate and configured to transfer vibrational energy to the support plate to induce a vibrational movement of the support plate, wherein the support plate is supported by the support structure in a free-floating manner, wherein the one or more rotary vibrators are connected to a second major surface of the support plate via a respective bracket, the second major surface being opposite to the first major support surface and facing away from the bulk material holding space, wherein the bracket comprises a support plate mounting surface attached to the second major surface of the support plate, the support plate mounting surface having a length extension along the second major surface as seen towards the discharge port, wherein the bracket comprises a vibrator mounting surface to which the rotary vibrator is attached, whereby a centre of rotation of at least one rotary vibration element of the rotary vibrator is located at distance from the second major surface in a direction normal to the second major surface, and wherein a ratio between the length extension of the support plate mounting surface and the distance from the second major surface to the centre of rotation is in a range of 0,75 to 4,0.

Hereby an improved storage and reclaim system for bulk material is provided.

The storage and reclaim system is designed for, and hence suitable to be used with bulk material in general.

Further, the storage and reclaim system is advantageous in that it is designed to be capable of handling bulk materials exhibiting a high internal friction also referred to as a high internal sticking material. Hence, the storage and reclaim system is designed to efficiently handle bulk materials which are prone to sticking and clogging during handling, such as during unloading. Non-limiting examples of such bulk materials are wood chips and saw dust which are prone to arching and walling during handling.

By "arching" is meant that the bulk material may form a self-supporting arch traversing a void space. This means that the bulk material may form an arch for instance over a discharge port such that the arch prevents the bulk material from reaching the discharge port.

By "walling" is meant that the bulk material forms a self-supporting steep wall. This means that the bulk material may form a wall-like structure which may prevent the material from flowing towards e.g. a discharge port. For instance, wood chips may form walls having more or less vertical faces which may be exceed ten meters in height.

Furthermore, the storage and reclaim system is advantageous in that is provides for a more efficient vibration of the support plate which in turn leads to a more efficient unloading of bulk material both in terms of unloading speed and in terms of the total amount which may be unloaded. Put differently, a faster storage and reclaim system which leaves less residual material in the bulk material holding space is provided.

The present invention is based on the realization that by connecting one or more rotary vibrators to a support plate which is supported in a free-floating manner in such a way that the centre of rotation of at least one rotary vibration element of the rotary vibrator is positioned at a relatively speaking large distance from the support plate in relation to a length extension by which the rotary vibrator is connected along the support plate, provides for that vibrational energy of the rotary vibrator may be transferred to the support plate in a way where vibrations of a significantly increased amplitude are induced or provided in the support plate. More specifically, each rotary vibrator is connected to the free-floating support plate via a respective bracket such that a ratio in the range of 0,75 to 4 between the length extension of the support plate mounting surface and the distance from the second major surface of the support plate to the centre of rotation of the at least one rotary vibration element of the rotary vibrator is achieved. In this way, vibrations of a significantly increased amplitude may be induced in the support plate, by operating the rotary vibrator. As a result, a faster storage and reclaim system which leaves less residual material in the bulk material holding space is provided.

By "rotary vibrator" is here meant any type of vibrator which induces vibrations by rotating a vibration element. The vibration element may be rotated in any fashion and may during rotation follow any path. For instance, the vibration element may be rotated about an axis of rotation. For instance, the vibration element may be rotated such that it follows an elliptical path. For instance, the vibration element may be rotated such that it follows an arbitrary path. The rotation may be two-dimensional. The rotation may be three-dimensional.

By "vibration element" is here meant any type of element which when being rotated (at a relevant rotation rate) causes a vibration. The vibration element may typically be an element or body which has its mass eccentrically or unsymmetrically distributed about its point of rotation. The vibration element may however be symmetrically supported with relation to its mass centre but rotated along a path which results in a vibration in response to the rotation. The vibration element may have any shape as long as it causes a vibration in response to being rotated (at such relevant rotation rate).

By "centre of rotation" is here meant any central point or mean point about which the vibration element is rotated. In case the vibration element is rotated about an axis of rotation, the centre of rotation will coincide with the axis of rotation in the sense that the centre of rotation lies somewhere along the axis of rotation. In case the vibration element is rotated along an elliptical path, the centre of rotation will lie in the centre of the elliptical path.

The storage and reclaim system comprises a bulk material holding space. The bulk material holding space is typically designed to hold bulk cargo during transport, storage and/or handling. The bulk cargo holding space may for example be a cargo hold of a vessel or ship, a warehouse or storage facility, a hopper, a storage tower, a train carriage or a truck wreckage.

Hence, the bulk cargo may be static in the bulk material holding space for prolonged time such as when transported in a ship or when stored in a storage facility. Further, the bulk cargo may flow through the bulk material holding space or be static for only a short period of time such as when handled in a hopper. The size, shape and design of the bulk material holding space may consequently vary greatly.

The bulk material holding space has a bottom portion which is provided with a discharge port or gate. The discharge port is typically used to extract bulk material from the bulk material holding space by opening the discharge port such that the bulk material is allowed to flow or fall out of the bulk material holding space through the discharge port.

The bottom portion of the bulk material holding space comprises an inclined support plate for supporting the bulk material, at a first major surface thereof, and for assisting gravity induced feeding of the bulk material towards the discharge port. Hence, the bulk material may travel along the inclined support plate towards the discharge port while being supported by the first major surface of the inclined support plate. The inclination of the inclined support plate brings about that the gravity force acting on the bulk material will assist the bulk material in being fed towards the discharge port.

The support plate is supported by a support structure. The support structure may be any structure capable of supporting the support plate. The support structure may include one or more plates supporting the support plate. The support structure may include one or more beams supporting the support plate. The support structure may include one or more grids supporting the support plate. The support structure may include a combination of one or more load carrying structures such as plates, beams, and grids.

One or more rotary vibrators are connected to the support plate. In the following, a rotary vibrator or rotary vibrators may for reasons of eligibility also be referred to a vibrator or vibrators wherever deemed appropriate. The rotary vibrators are configured to transfer vibrational energy to the support plate. The vibrators may thus induce a vibrational movement of the support plate in response to being operated. The vibrational movement of the support plate will propagate into the bulk material supported by the support plate. The vibrational movement propagated into the bulk material will consequently vibrate or shake the bulk material or at least a part of the bulk material. By vibrating the bulk material, arching and walling of the bulk material is counteracted hence resulting in that the bulk material is less prone to sticking and clogging. By vibrating the bulk material, arches and wall of the bulk material may be made to collapse hence resulting in that the bulk material is counteracted from sticking and clogging.

Any number of rotary vibrators including one may be used to advantage. The vibrators may be of any suitable kind. The vibrators may be hydraulically driven. The vibrators may be pneumatically driven. The vibrators may be electrically driven. The vibrators may be electromagnetically driven. The vibrators may be adjustable. A vibration power of the vibrators may be adjustable. A vibration force of the vibrators may be adjustable. A vibration amplitude of the vibrators may be adjustable. A vibration frequency of the vibrators may be adjustable. A vibration time of the vibrators may be adjustable, to give a few non-limiting examples. The rotary vibrators may be adjusted based on the bulk material at hand such that an efficient feeding of the bulk material towards the discharge port is achieved. For instance, the vibrational amplitude may have to be increased for materials having large internal friction. Similarly, the vibrational amplitude may potentially be lowered for materials having a limited internal friction.

The one or more rotary vibrators are connected to the second major surface of the support plate via a respective bracket. The second major surface being opposite to the first major support surface. Thus, the second major surface faces away from the bulk material holding space. In this way, the vibrators or vibrator may efficiently transfer vibrational energy to the support plate to induce a vibrational movement of the support plate without interfering with the bulk material holding space. Hence, the vibrators may not occupy any space in the bulk material holding space. The vibrators may not disturb a flow of bulk material being fed towards the discharge port of the bulk material holding space.

Further, by connecting the one or more vibrators to the second major surface of the support plate via a respective bracket several advantages may be achieved, since the location of the vibrator with respect to the support plate as well as the contact surface at the support plate may be adapted or tailored by means of the bracket.

By the bracket comprising a support plate mounting surface attached to the second major surface of the support plate, wherein the support plate mounting surface having a length extension along the second major surface as seen towards the discharge port, the length over which vibrational energy is transferred to the support plate may be adapted.

By the bracket comprising a vibrator mounting surface to which the rotary vibrator is attached, whereby a centre of rotation of at least one rotary vibration element of the rotary vibrator is located at distance from the second major surface in a direction normal to the second major surface, the distance between the centre of rotation of the at least one rotary vibration element of the rotary vibrator and the support plate may be adapted.

By a ratio between the length extension of the support plate mounting surface and the distance from the second major surface to the centre of rotation being in a range of 0,75 to 4,0 several significant advantages may be achieved, since the centre of rotation of the at least one rotary vibration element of the rotary vibrator may be positioned at a relatively speaking large distance from the support plate in relation to the length by which the rotary vibrator is connected along the support plate. In this way, the rotary vibrator may, opposed to state-of-the-art solutions, transfer its vibrational energy while being connected to support plate via a significant effective lever arm as compared to the length extension of the support plate mounting surface, i.e. where the effective lever arm is defined by the distance between the centre of rotation of the at least one rotary vibration element and the second major surface of the support plate.

The support plate is supported by the support structure in a free-floating manner.

By "free-floating manner" is meant that the support plate is supported by the support structure such that it may vibrate independently of the support structure or may vibrate substantially independently of the support structure. The support plate is thus supported in a fashion where its contact surface with the support structure is free or substantially free. In other words, the support plate may rest freely on the support structure. The support plate may be restricted to move in a plane thereof with respect to the support structure. This arrangement of the support plate brings about that at least a central major portion of the support plate is free of any connections or couplings to other entities or objects such as the support structure.

By this arrangement, the vibrators may efficiently transfer vibrational energy the support plate while limiting the amount of vibrational energy being transferred to the support structure. Hence, less vibrations are consequently transferred to the surroundings which efficiently mitigates body sounds and premature material fatigue. For natural reasons, a limited amount of the vibrational energy transferred by the rotary vibrators may be transferred to the surroundings.

Further, since the support plate is supported in a free-floating manner, the support plate may flex or bend significantly while not effecting the support structure or while only affecting the support structure to limited degree. In other words, vibrations of a significant amplitude flexing the support plate may be induced in the support plate by the rotary vibrator or vibrators, by the provision of the bracket which results in that the ratio between the length extension of the support plate mounting surface and the distance from the second major surface to the centre of rotation is in the range of 0,75 to 4,0. This approach of deliberately flexing the support plate is diametrically different or opposite to the common practice of attaching vibrators via elongated beams in order to avoid flexing of the surface being vibrated.

Moreover, an increased amplitude of the vibrations induced in the support plate may be achieved over a wider range of load cases as compared to state-of-the-art solutions where the vibrational energy of a vibrator is deliberately distributed over a large length and hence a large area. In practice, the vibrational force exerted by the vibrator may flex the support plate even when subjected to great loads such that vibrational energy is transferred to bulk material supported by the support plate.

Another advantage resides in that a smaller vibrator, or smaller vibrators may be used and still get an increased vibration amplitude in the support plate. In this way, the overall cost and material consumption of the storage and reclaim system may be reduced.

Moreover, since the support plate is supported in a free-floating manner, vibrational energy may be efficiently transferred to the bulk cargo and even so with a significantly increased amplitude. This brings about that arching, and walling may be mitigated even more efficiently and that the bulk material may travel more easily towards the discharge port. Moreover, since the support plate is supported in a free-floating manner, materials with high internal friction which cannot flow without added energy in the form of vibration may advantageously be handled by the storage and reclaim system. Hence, the inclination of the support plate may be even further reduced bringing about that less space is occupied by the storage and reclaim system. As a result, the bulk material holding space may be made even wider. As a further result of the reduced inclination of the support plate, arching of the bulk material may be mitigated.

The one or more rotary vibrators may be configured to, in response to being operated, rotate the at least one rotary vibration element about the centre of rotation thereby transferring rotational energy of the at least one rotary vibration element to vibrational energy to the support plate, via the bracket, to induce a transversal traveling wave in the support plate, which is advantageous in that the induced transversal traveling wave may assist in feeding the bulk material. As a result, the risk of clogging and sticking may be further reduced.

In practice, a transversal traveling wave may be formed locally in the support plate at the location where the support plate mounting surface of the bracket is attached to the support plate. Thus, a transversal traveling wave may be formed in the support plate and consequently transferred to the bulk material present in the bulk material holding space. In practice, such a transversal traveling wave may promote feeding of the bulk material along a travelling direction of the transversal traveling wave. In other words, such a transversal traveling wave may promote a net feeding of the bulk material along a travelling direction of the transversal traveling wave. However, the effect of gravity induced feeding of the bulk material may typically still constitute the main feeding effect. Further, a respective transversal traveling wave may be formed locally in the support plate at the location of each bracket. In other words, a transversal traveling wave may be formed locally in the support plate for each vibrator. In case of more than one vibrator and more than one bracket, the so formed transversal traveling waves may in practice jointly act as a transversal traveling wave which promote a net feeding of the bulk material along the travelling direction of the transversal traveling wave. To this end, in case of more than one vibrator and more than one bracket the vibrators and brackets may to advantage be positioned such that the locally formed transversal traveling waves travel in the same or substantially the same travel direction so as to jointly promote a net feeding of the bulk material along a common travelling direction.

The at least one rotary vibration element may be rotatable about an axis of rotation coinciding with the centre of rotation, wherein the axis of rotation being substantially perpendicular to the length extension of the support plate mounting surface and being substantially parallel to the second major surface of the support plate, which is advantageous in that a transversal traveling wave may be formed in the support plate along the length extension of the support plate mounting surface in response to operating the vibrator. Thus, a transversal traveling wave assisting a net feeding of the bulk material along the length extension of the support plate mounting surface may be formed in the support plate.

The at least one rotary vibration element may be rotatable about an axis of rotation coinciding with the centre of rotation, wherein the axis of rotation being perpendicular to the length extension of the support plate mounting surface and being parallel to the second major surface of the support plate.

The one or more rotary vibrators may be configured to, in response to being operated, rotating the at least one rotary vibration element about the axis of rotation such that the transversal traveling wave travels towards the discharge port, which is advantageous in that a net feeding of the bulk material towards the discharge port may be promoted. Further, as a result, the material bulk holding space may be even more efficiently emptied both in terms of unloading speed and in terms of the total amount which may be unloaded. In other words, by rotating the at least one rotary vibration element about the axis of rotation such that the transversal traveling wave travels towards the discharge port a faster unloading with less residual bulk material left in the bulk material holding space may be realized. In practice, the transversal traveling wave may efficiently provide for a net flow of the bulk material towards the discharge port.

The bracket may comprise a first part and a second part releasably connected to each other, wherein the first part comprises the support plate mounting surface, and wherein the second part comprises the vibrator mounting surface, which is advantageous in that the properties of the bracket may adapted by combing first and second parts of different types. In this way, for instance the size and shape of the support plate mounting surface and the distance from the second major surface to the centre of rotation may be adapted independently of each other. Further, the bracket may be adapted to suit different types of vibrators by utilizing second parts of different types. Correspondingly, the properties, such as the length extension, of the support plate mounting surface may be adapted by utilizing first parts of different types. Furthermore, the mechanical strength and overall weight of the bracket may be

The length extension of the of the support plate mounting surface may be in a range of 400 to 1100 mm, such as 500 to 1000 mm, which is advantageous in that vibrations of a significant amplitude may be induced in the support plate. Further, by adapting the length extension, the size and shape of the support plate mounting surface may be adapted. In this way, the flexing of the support plate may be adapted.

A width extension of the support plate mounting surface along the second major surface, in a direction perpendicular to the length extension of the support plate mounting surface, may correspond to no more than 50 % of the length extension, such as no more than 25-40 % of the length extension, which is advantageous in that vibrations of a significant amplitude may be induced in the support plate. Further, by adapting the width extension, the size and shape of the support plate mounting surface may be adapted. In this way, the flexing of the support plate may be adapted. In this regard, it is to be understood that a relatively speaking small width extension may result in a situation where the vibrator is not held firmly in position. Such situation is generally to be avoided.

The distance from the second major surface to the centre of rotation may be in a range of 200 mm to 600 mm, such as, 250 mm to 400 mm, which is advantageous in that vibrations of a significant amplitude may be induced in the support plate. Further, by adapting distance from the second major surface to the centre of rotation, the effective lever arm to the centre of rotation may be adapted. In this way, the amplitude of the vibration and hence the flexing of the support plate may be adapted.

A distance from the second major surface, in a direction normal to the second major surface, to the vibrator mounting surface may be in a range of 100 mm to 400 mm, such as 120 mm to 350 mm, which is advantageous in that vibrations of a significant amplitude may be induced in the support plate. Further, by adapting distance from the second major surface to the centre of rotation, the effective lever arm to the centre of rotation may be adapted. In this way, the amplitude of the vibration and hence the flexing of the support plate may be adapted.

The one or more rotary vibrators may be configured to, in response to being operated, rotate the at least one rotary vibration element about the centre of rotation with a rotational speed of 1500 rpm to 6000 rpm, which is advantageous in that the frequency of the vibrations may be adapted to suit for instance different types of bulk materials and different load cases. In this regard, it is to be noted that a rotational speed of 1500 rpm to 6000 rpm corresponds to a vibrational frequency of 25 Hz to 100 Hz.

The support plate may be inclined with an angle in a range of 5 degrees to 30 degrees, such as 15 degrees to 20 degrees, with respect to a horizontal plane. The support plate may be inclined with an angle in the range of 17-23 degrees with respect to a horizontal plane. The support plate may be inclined with an angle of about 20 degrees with respect to a horizontal plane. The support plate may be inclined with an angle in the range of 5-40 degrees with respect to a horizontal plane. The support plate may be inclined with an angle in the range of 5-50 degrees with respect to a horizontal plane. The support plate may be inclined with an angle in the range of 5-60 degrees with respect to a horizontal plane. The support plate may be inclined with an angle in the range of 20-30 degrees with respect to a horizontal plane. The support plate may be inclined with an angle of about 30 degrees with respect to a horizontal plane.

The support structure may comprise a backing plate, wherein the support plate rests on the backing plate, and wherein each bracket extends through an opening and/or a slot in the backing plate, which is advantageous in that the support plate may be supported by the backing plate in a secure manner while at the same time the vibrators or vibrator may efficiently transfer vibrational energy to the support plate to induce a vibrational movement of the support plate with a minimal impact on the support structure. Further, by supporting one plate on another plate, the contact surface between the two plates may be maximized. This may reduce vibration induced wear and/or the risk of deforming the support plate.

The system further comprises an intermediate layer arranged between the support structure and the support plate, the intermediate layer having vibration isolating properties such that transmission of vibrations from the support plate to the support structure is counteracted. By arranging an intermediate layer between the support structure and the support plate several advantages may be achieved. The intermediate layer may have vibration isolating properties, hence reducing an overall vibration level of the support structure and any entities connected thereto. The intermediate layer may have sound attenuating properties, hence reducing an overall sound level and/or mitigating propagation of undesired noise. Further, propagation of undesired vibrations may be reduced. An intermediate layer between the support structure and the support plate may reduce body sounds further. An intermediate layer between the support structure and the support plate may reduce material fatigue further. The intermediate layer may have wear resistant properties, hence reducing wear of the support structure and the support plate. Examples of suitable materials for the intermediate layer include rubber, natural rubber, synthetic rubber, polymers, PTFE, and steel-based energy absorbing materials. The intermediate layer may include a plurality of materials. The intermediate layer may include a plurality of layers arranged on top of each other. The plurality of layers may or may not be connected to each other. The plurality of layers may have different properties including sound attenuating properties, vibration isolating properties and wear resistant properties.

The intermediate layer may comprise an elastomeric material, which is advantageous in that transmission of vibrations from the support plate to the support structure may be efficiently counteracted.

The intermediate layer may have progressive compression characteristics by the intermediate layer including at least two different materials of different thicknesses arranged side by side in the intermediate layer, and/or by the intermediate layer including at least two different materials stacked on top of each other, and/or by the intermediate layer being textured, which is advantageous in that the intermediate layer is capable of handling large loads while still not being excessively compressed.

The intermediate layer may include at least two different materials of different thicknesses arranged side by side in the intermediate layer. By including a thicker and softer material side by side a thinner and harder material, the intermediate layer may be made to counteract transmission of vibrations from the support plate to the support structure over a wide range of loads. The ticker and softer material may be compressed even when the intermediate layer is subjected to small loads and may thus provide for that transmission of vibrations from the support plate to the support structure is counteracted. The thinner and relatively speaking harder material may, in addition to the thicker and softer material, be compressed when the intermediate layer is subjected to larger loads and may thus provide for that transmission of vibrations from the support plate to the support structure is counteracted over a large range of loads. The respective materials may be provided in any suitable pattern, including but not limited to, material stripes, material lattices, material islands surrounded by a different material, material islands of different materials and similar.

The intermediate layer may include at least two different materials or layers stacked or arranged on top of each other. The plurality of layers may or may not be connected to each other. The plurality of layers may have different properties including sound attenuating properties, vibration isolating properties and wear resistant properties. An upper material or layer may be softer as compared to a lower material or layer. By this design, the upper softer layer may be compressed even when the intermediate layer is subjected to small loads and may thus provide for that transmission of vibrations from the support plate to the support structure is counteracted. The lower relatively speaking harder layer may be compressed when the intermediate layer is subjected to larger loads and may thus provide for that transmission of vibrations from the support plate to the support structure is counteracted over a large range of loads.

The intermediate layer may be textured. For instance, the intermediate layer may have a textured or patterned surface, where some portions are higher than others. A wavy or striped surface may be used to advantage. By this design, the higher portions may be compressed even when the intermediate layer is subjected to small loads and may thus provide for that transmission of vibrations from the support plate to the support structure is counteracted. The lower portions may be compressed when the intermediate layer is subjected to larger loads and may thus provide for that transmission of vibrations from the support plate to the support structure is counteracted over a large range of loads.

The discharge port may further comprise one or more inclined discharge port plates for guiding the bulk material and for assisting gravity induced feeding of the bulk material towards the discharge port, wherein each discharge port plate is inclined with an angle in a range of 30-70 degrees with respect to a horizontal plane, wherein one or more vibrators are connected to each discharge port plate and configured to transfer vibrational energy to the discharge port plate to induce a vibrational movement of the discharge port plate, wherein each discharge port plate is supported by the support structure in a free-floating manner. By this arrangement the discharge of the bulk material through the discharge port may be facilitated. The combination of a support plate and one or more inclined discharge port plates brings about that the bulk material may flow more easily out through the discharge port. If the support plate is inclined less than the one or more inclined discharge port plates, arching of the bulk material may be further counteracted. Arching may be reduced since the support plate will exhibit a reduced capability of receiving forces transversal to a horizontal plane. In other words, the support plate will not be able to support a material arch as effective as when steep side walls are used.

Any number of vibrators including one may be used to advantage for the discharge port plates. Reference regarding how each discharge port plate is supported by the support structure in a free-floating manner is made to the above. However, when it comes to the vibrator or vibrators the requirements are not as detailed as heave been described above for the one or more rotary vibrators used to transfer vibrational energy to the support plate via the bracket. In fact, less powerful vibrators may be used for the discharge port plates. Further, the vibrators used of the discharge port plates may be of any type including linear vibrators. Moreover, the vibrators used of the discharge port plates may be connected to the discharge port plates via state-of-the-art elongated beams. All this because the need for providing an increased vibration amplitude of the above-described type is not as important for the discharge port plates owing from their generally steeper inclination angle and proximity to the discharge port.

The system may further comprise an additional inclined support plate for supporting the bulk material and for assisting gravity induced feeding of the bulk material towards the discharge port from an opposite side thereof, which is advantageous in that a discharge port may be fed with bulk material from more than one direction.

The additional support plate may comprise one or more rotary vibrators connected to the additional support plate via a respective bracket and configured to transfer vibrational energy to the additional support plate to induce a vibrational movement of the additional support plate, wherein the additional support plate is supported by the support structure in a free-floating manner. Advantages related to the additional support plate are analogous to those of the support plate why reference is made to the above.

Each vibrator may be independently controllable, which is advantageous in that the vibrational movement of the support plate, if present the discharge port plate and if present the additional support plate may be controlled such that an efficient gravity induced feeding of the bulk material towards the discharge port is achieved. It is thus possible to induce a vibrational movement at a certain area of the support plate if present the discharge port plate and if present the additional support plate. It is thus possible to operate the vibrators in a certain sequence aiming at achieving an efficient feeding of the bulk material towards the discharge port. Moreover, properties of an induced vibrational movement may be altered to suit different needs. For instance, amplitude, frequency, and operation time may be controlled for each vibrator independently. The fact that each vibrator may be independently controllable also brings about that energy may be saved since the vibrators may only be operated when needed. The fact that each vibrator may be independently controllable also brings about that energy may be saved since the vibrators may only be operated at certain power. The fact that each vibrator may be independently controllable also brings about that undesired body sound and/or vibrations may be reduced since the vibrators may only be operated when needed.

The system may further comprise a conveyor arranged below the bottom portion of the bulk material holding space for receiving bulk material from the bulk material holding space via the discharge port, which is advantageous in that the bulk material of the bulk material holding space may be conveyed away after leaving the bulk material holding space via the discharge port. The bulk material may for instance be conveyed out of a vessel or a storage facility or warehouse.

According to another aspect of the invention, there is provided a vessel comprising a storage and reclaim system according to the first aspect. In general, features of this aspect provide similar advantages as discussed above in relation to the first aspect. Consequently, said advantages will not be repeated in order to avoid undue repetition.

According to another aspect of the invention, there is provided a land-based storage comprising a storage and reclaim system according to the first aspect. In general, features of this aspect provide similar advantages as discussed above in relation to the first aspect. Consequently, said advantages will not be repeated in order to avoid undue repetition. However, it may additionally be mentioned that a land-based storage according to the invention may have a significantly reduced height as compared to prior art land-based storages. A reduced height may in turn result in an overall increased capacity of the land-based storage. Moreover, such land-based storage may be more efficient in terms unloading speed and in terms of the total amount which may be unloaded.

According to another aspect of the invention, there is provided a hopper comprising a storage and reclaim system according to the first aspect. In general, features of this aspect provide similar advantages as discussed above in relation to the first aspect. Consequently, said advantages will not be repeated in order to avoid undue repetition. However, it may additionally be mentioned that a hopper according the invention may have a significantly reduced height as compared to prior art hoppers. A reduced height may in turn result in an overall increased capacity of e.g. a load system including a grabber attached to a crane, since the crane may not have to hoist the grabber as high as when using a prior art hopper. Another advantage resides in that the hopper may have a reduced weight and may include less material as compared to a prior art hopper. Further, the hopper may be more efficient in terms unloading speed and in terms of the total amount which may be unloaded.

According to another aspect of the invention, there is provided a use of a storage and reclaim system according to the first aspect for handling of bulk material chosen from group consisting of: wood chips, wood pellets, sawdust, coal, ore, gypsum rock, bauxite, alumina, cement, sand, gravel, crushed rock, salt, grains and aggregates. Hence, the storage and reclaim system according to the first aspect may be used for a large variety of materials. In general, features of this aspect provide similar advantages as discussed above in relation to the first aspect. Consequently, said advantages will not be repeated in order to avoid undue repetition.

Still other objectives, features, aspects and advantages of the invention will appear from the following detailed description as well as from the drawings.

### Brief Description of the Drawings

The above, as well as additional objects, features and advantages of the present inventive concept, will be better understood through the following illustrative and non-limiting detailed description of preferred variants of the present inventive concept, with reference to the appended drawings, where the same reference numerals will be used for similar elements, wherein:
Fig. 1 conceptually illustrates a partial perspective cross sectional view of a ship according to prior art equipped with a self-unloader system.
Fig. 2 conceptually illustrates a partial perspective cross sectional view of a vessel equipped with storage and reclaim system according to the present inventive concept.
Fig. 3A conceptually illustrates a perspective view of a portion of the cargo hole of the vessel of Fig. 2.
Fig. 3B conceptually illustrates a perspective view of a bracket with a rotary vibrator attached thereto.
Fig. 3C conceptually illustrates a cross-sectional view of the bracket and the rotary vibrator of Fig. 3B.
Fig. 4 conceptually illustrates a perspective view of a portion of a storage and reclaim system according to the present inventive concept.
Fig. 5A-D conceptually illustrates an image series of how a support plate is flexed by four rotary vibrators during a partial duty cycle of the vibrators.
Fig. 6 conceptually illustrates a perspective view of a land-based storage equipped with a storage and reclaim system according to the present inventive concept.
Fig. 7 conceptually illustrates a perspective view of a hopper equipped with a storage and reclaim system according to the present inventive concept.

### Detailed Description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

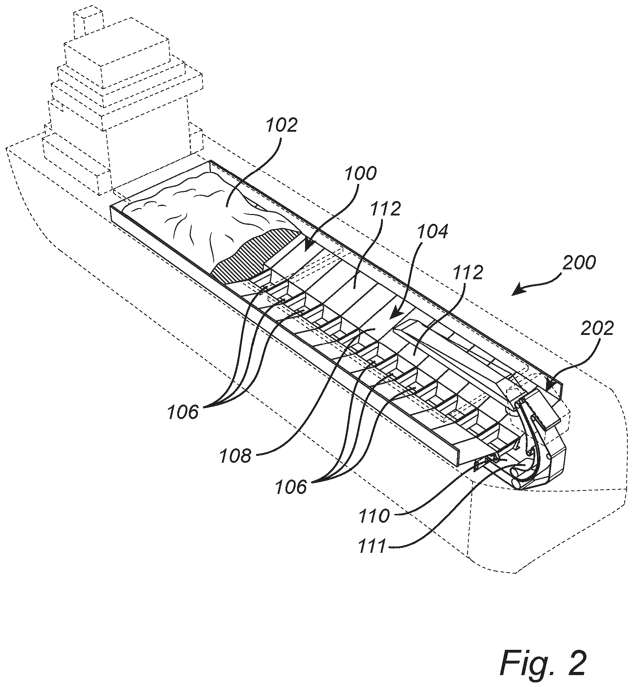

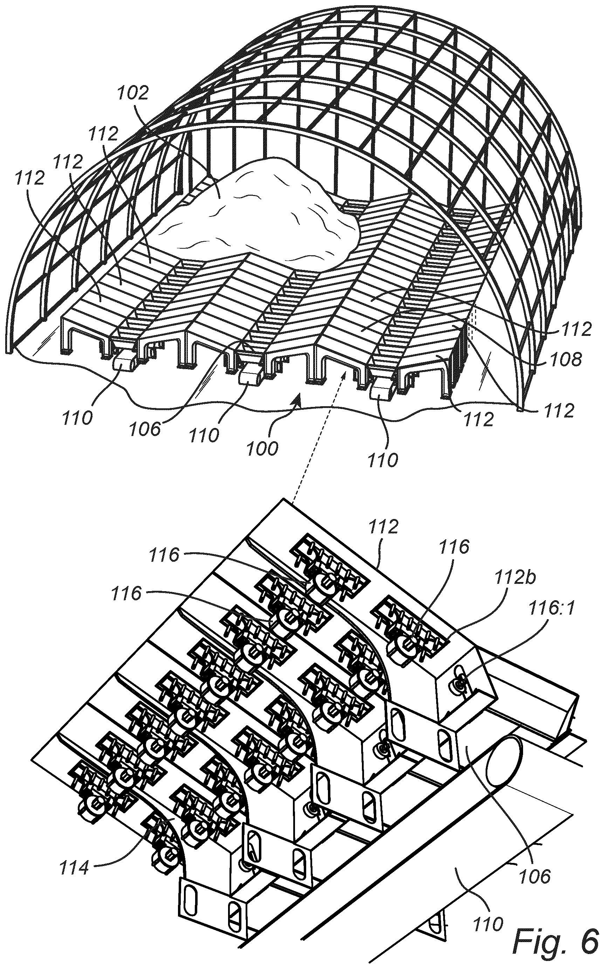

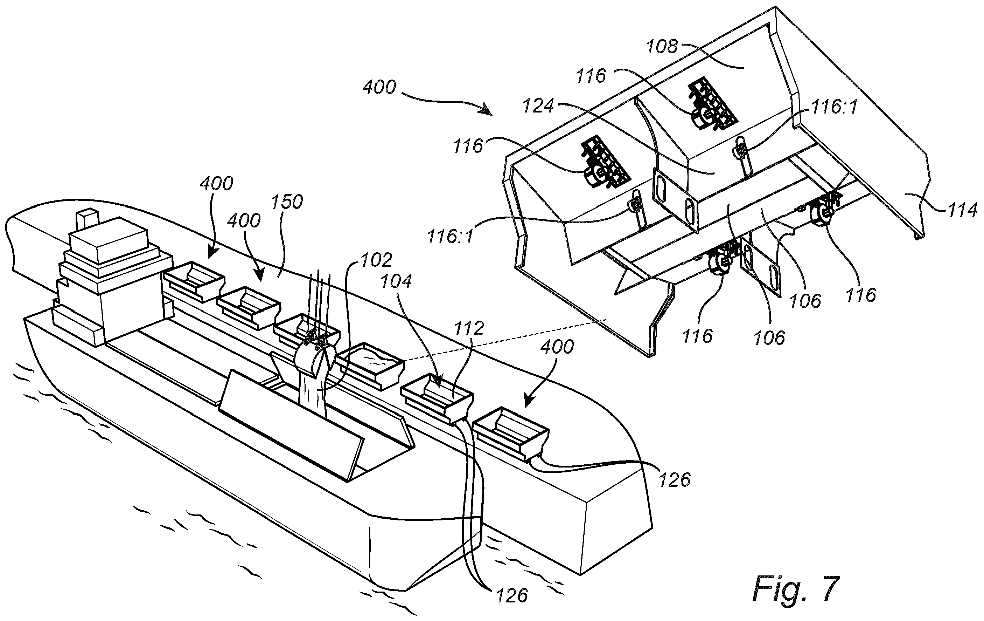

Initially a storage and reclaim system 100 will be described with reference to Figs. 2-5. The storage and reclaim system 100 will be described in a context where the storage and reclaim system 100 is installed in a vessel 200. However, the storage and reclaim system 100 may be used in a number of different applications and application areas. Examples of this will be described below with reference to Figs. 6 and 7. Those described examples are however to be considered as non-limiting meaning that the storage and reclaim system 100 may be equally well be used in e.g. a warehouse, a storage tower, a train carriage, a truck wreckage or similar.

The vessel 200 depicted in Fig. 2, mainly shown in phantom, is a large naval vessel 200 in form of a bulk loader having a deadweight tonnage of about 8600 tonnes and a gross load capacity of about 12500 cubic meters. The vessel 200 is consequently designed to transport bulk material 102 in its material holding space 104 commonly referred to as a cargo hole or a cargo hold. The material holding space 104 may be sectionalised and hence include several portions together forming the material holding space 104.

The vessel 200 is of a so-called self-unloader type meaning that the bulk material 102 may be unloaded from the material holding space 104 automatically by means of a self-unloader system 202 installed in the vessel 200.

The self-unloading system 202 includes among other things the storge and reclaim system 100.

The depicted self-unloading system 202 is a permanently installed system which was installed in the vessel 200 on the wharf when the vessel 200 was built. However, existing vessels may advantageously be retrofitted with self-unloading systems including a storge and reclaim system 100 according to the present inventive concept. Similarly, a storge and reclaim system 100 according to the present inventive concept may advantageously be retrofitted in other applications and application areas.

The bulk material 102 present in the material holding space 104 may be automatically unloaded from the material holding space 104 through a number of discharge ports 106 provided at the bottom of the material holding space 104. In other words, a bottom portion 108 of the material holding space 104 is provided with discharge ports 106. The discharge ports 106 are commonly referred to as gates. The number of discharge ports 106 may vary greatly e.g. depending on the size of the vessel 200 at hand. Tenths and even hundreds of discharge ports 106 may be used to advantage. A single discharge port 106 may be used to advantage e.g. in a small vessel, in a hopper or a storage tower.

The discharge ports 106 of the depicted vessel 200 are arranged along a longitudinal direction of the vessel 200. The discharge ports 106 of the depicted vessel 200 are arranged along a centre line of the vessel 200. Each discharge port 106 may be opened and closed individually. A plurality of discharge ports 106 may be opened and closed at the same time. However, when unloading bulk material 102 from the material holding space 104 it is common practice to open one discharge port 106 at the time.

Each discharge port 106 may as depicted be located above a conveyor 110. Hence, the conveyor 110 is arranged below the bottom portion 108 of the bulk material holding space 104 for receiving bulk material 102 from the bulk material holding space 104 via the discharge ports 106.

At a front end of the vessel 200, the conveyor 110 bends upwards in a C-shape where the conveyor 110 meets and is backed by a lifting conveyor 111. Hence, bulk material 102 traveling on the conveyor 110 is when reaching a front end of the vessel 200 pressed and held between the conveyor 110 and the lifting conveyor 111 such that the bulk material is lifted upwards along the C-shape and further out of the vessel 200. About 500 cubic meters of cargo may be unloaded from the vessel 200 by the conveyor 110 and the lifting conveyor 111. The conveyor 110 may for instance end at a further conveyor arranged above deck of the vessel 200. The conveyor 110 may for instance end at a transport arm arranged above deck of the vessel 200. The conveyor 110 may for instance end at a transport screw arranged above deck of the vessel 200.

When a discharge port 106 is opened, bulk material 102 may consequently fall down on the conveyor 110 and travel along the conveyor 110 until being lifted upwards and out of the vessel 200 by the conveyor 110 and the lifting conveyor 111. In order to have control of the amount of bulk material 102 on the conveyor and to avoid stacking of too much bulk material 102 at a certain point of the conveyor 110 one discharge port 106 is advantageously opened at a time.

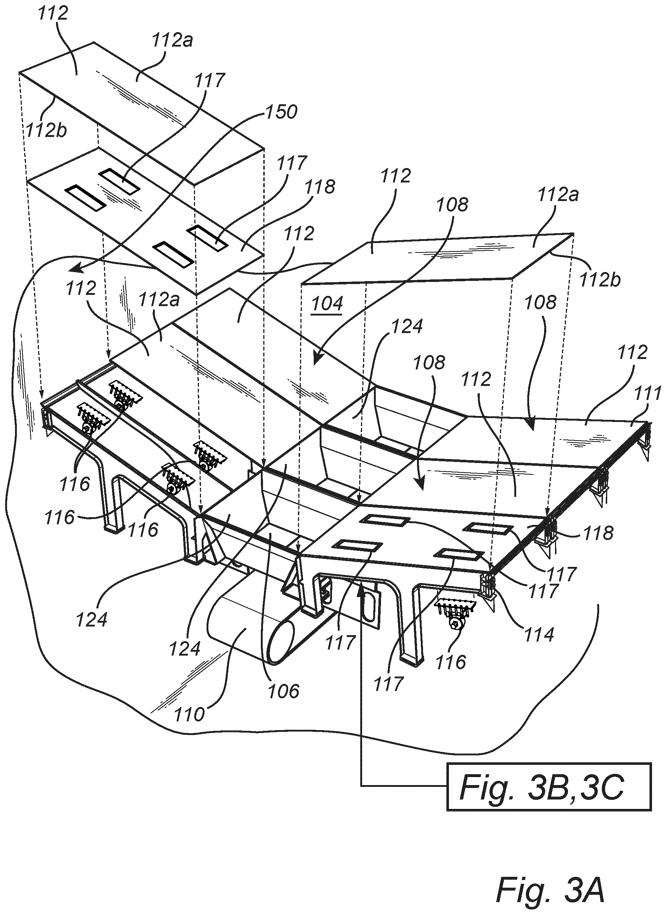

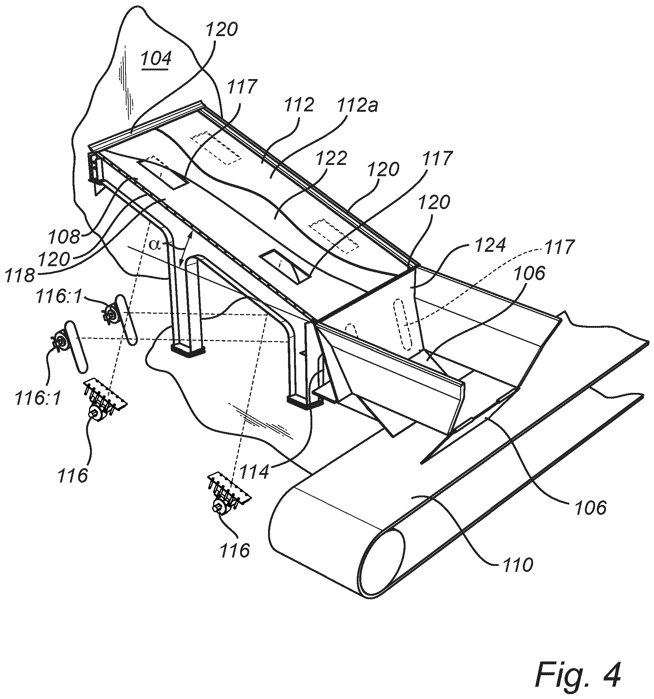

Now also referring to Figs. 3A-C and 4. As can be seen in Fig. 3A, the bottom portion 108 of the depicted bulk material holding space 104 is employed with a plurality of modules each forming part of storage and reclaim system 100 which in turn forms part of the self-unloading system 202. Each module of the depicted kind in Fig. 3A includes opposite material supporting surfaces in form of support plates 112.

In Fig. 4 one side, e.g. a starboard side, of a module is depicted. The depicted arrangement of Fig. 4 thus corresponds to a portion of the storage and reclaim system 100 of the self-unloading system 202. However, the depicted arrangement of Fig. 4 may very well form a complete storage and reclaim system 100 according to the present inventive concept. In view of this, the arrangement depicted in Fig. 4 will in the following be referred to a storage and reclaims system 100 although the arrangement forms part of the overall storage and reclaims system 100 of the depicted vessel 200.

Hence, in Fig. 4 it is illustrated a storage and reclaim system 100 for bulk material 102. The system 100 includes a bulk material holding space 104 having a bottom portion 108 as described above. The bottom portion 108 is provided with a discharge port 106. Further, the bottom portion 108 comprises an inclined support plate 112. The support plate 112 is consequently supporting the bulk material 102 in the bulk material holding space 104. More specifically, the support plate 112 is supporting the bulk material 102 in the bulk material holding space 104 at a first major surface 112a thereof. The inclined support plate 112 has a further principal purpose apart from supporting the bulk material 102 namely, to assist gravity induced feeding of the bulk material 102 towards the discharge port 106. Hence, the bulk material 102 may flow or travel along the inclined support plate 112 towards the discharge port 106 while being influenced of the gravitational force. The support plate 112 in the depicted system 100 is a steel plate having a thickness of 10 mm. Other thicknesses of the support plate 112 may be used to advantage. For instance, the thickness of the support plate 112 may typically range from 2-20 mm. For instance, the thickness of the support plate 112 may advantageously range from 6-12 mm. Other materials such as aluminium and/or fibre reinforced polymer may be used to advantage in the support plate 112. The support plate 112 may include a plurality of materials.

The support plate 112 is supported by a support structure 114. The support structure 114 has a main purpose of withstanding and carrying the weight of the bulk material 102 present in the material holding space 104. The support structure 114 may be designed in different ways to fulfil this purpose. The support structure 114 may advantageously include metal plates. The support structure 114 may advantageously include metal beams. The support structure 114 may advantageously include a metal grid. The support structure 114 may advantageously be made of other suitable materials, such as fibre reinforced polymer materials.

In the depicted storage and reclaim system 100 of Figs. 2-4, four rotary vibrators 116 are connected to each support plate 112. The vibrators 116, i.e. the rotary vibrators, are thus configured to transfer vibrational energy to the support plate 112 to induce a vibrational movement of the support plate 112. Hence, the support plate 112 will start to vibrate once one or more of the vibrators 116 are activated. In other words, the support plate 112 will start to vibrate in response to operating one or more of the vibrators 116. The rotary vibrators 116 may for example be hydraulic vibrators, pneumatic vibrators, electrical vibrators and/or electromagnetic vibrators. Vibrators 116 of different kinds may be used to advantage. Vibrators 116 of different kinds may be used in combination to advantage. The vibrators 116 may operate according to different working principles. Examples of suitable working principles include, counter-rotating unbalance motors, dual unbalanced exciter gearwheels, and triple shaft unbalance exciter designs. The vibrators 116 may operate according to different vibration motions. Examples of suitable vibration motions include circular motions, and elliptical motions. The speed and hence the stroke and frequency of the vibrators 116 may be adjusted. The speed and stroke of the vibrators 116 may be adjusted depending on material properties of the bulk material 102 at hand. Typical vibrational G-forces may be 3G to 7G.

The depicted rotary vibrators are rotary vibrators of the type D4.5-10A-5HC manufactured by Global Manufacturing Inc. It is however to be understood that other types of rotary vibrators from the same or other manufacturers may be used to advantage. Examples of such other suitable rotary vibrators 116 include D7-25-8HC manufactured by Global Manufacturing Inc, and Series NHG L, Series CC, CV, CCV and DV manufactured by Lofgren Engineering.

The support plate 112 is supported by the support structure 114 in a free-floating manner. Hence, the vibrators 116 may thus transfer vibrational energy to the support plate 112 while influencing the support structure to a limited extent. In other words, the vibrators 116 may to induce a vibrational movement of the support plate 112 while only slightly affecting the support structure 114. The free-floating arrangement of the support plate 112 on the support structure 114 may consequently bring about that the amount of vibrations or vibrational energy transferred to the support structure 114 may be significantly reduced. As a result of this vibrations and body sound in the vessel 200 may be significantly reduced. As a further result material fatigue and premature failure of components of the vessel 200 including the support structure 114 may be significantly reduced.

In practice, the support plate 112 may be attached in relation to the support structure 114 by means of a clamping profile clamping a peripheral portion of the support plate 112 and being attached to the support structure 114. In this way, a major portion of the support plate 112 may flex and vibrate independently of the support structure 114. Such clamping profile may be provided with a vibration damping lining to counteract transmission of vibrations from the support plate 112 to the support structure 114. Such clamping profile may be provided at a lowermost edge of the support plate 112 such that the support plate 112 is counteracted or prevented from sliding downwards due to its inclination. Alternatively, the support plate 112 may be counteracted or prevented from sliding downwards by means of an abutment vibration damper or an abutment bracket provided between the support plate 112 and the support structure 114.

In order to further counteract transmission of vibrations from the support plate 112 to the support structure 114, an intermediate layer 122 is arranged between the support structure 114 and the support plate 112. The intermediate layer 122 has vibration isolating properties such that transmission of vibrations from the support plate 112 to the support structure 114 is counteracted. The intermediate layer 122 may serve a number of purposes including sound attenuating, vibration isolation and wear protection.

The depicted intermediate layer 122 is a mixed-cell polyurethane elastomer sold under the tradename of Sylomer ^{®} SR 100 by Getzner. In other words, the depicted intermediate layer 122 comprises an elastomeric material.

The thickness of the depicted intermediate layer 122 is 25 mm. Other thicknesses such as 12,5 mm may be used to advantage. Further, other types of intermediate layers 122 may be used to advantage.

As a result of this design vibrations and body sound in the vessel 200 may be significantly reduced. As a further result material fatigue and premature failure of components of the vessel 200 including the support structure 114 may be significantly reduced.

As is understood from the above, the system 100 typically includes an additional inclined support plate 112, apart from the support plate 112 depicted in Fig. 4, for supporting the bulk material 102 and for assisting gravity induced feeding of the bulk material 102 towards the discharge port 106 form an opposite side thereof. Also as understood from the above, the additional support plate 112 typically includes one or more rotary vibrators 116 connected thereto. The vibrators 116 are thus configured to transfer vibrational energy to the additional support plate 112 correspondingly to induce a vibrational movement of the additional support plate 112. Also as understood from the above, the additional support plate 112 is typically supported by the support structure 114 in a free-floating manner.

The depicted support structure 114 comprises a backing plate 118. The support plate 112 rests on the backing plate 118. The backing plate 118 in the depicted system 100 is a steel plate having a thickness of 10 mm. Other thicknesses of the backing plate 118 may be used to advantage. For instance, the thickness of the backing plate 118 may typically range from 8-20 mm. Other materials such as aluminium and/or fibre reinforced polymer may be used to advantage in the backing plate 118. The backing plate 118 may include a plurality of materials.

In other variants the support plate 112 may for instance rest on beams or on a grid.

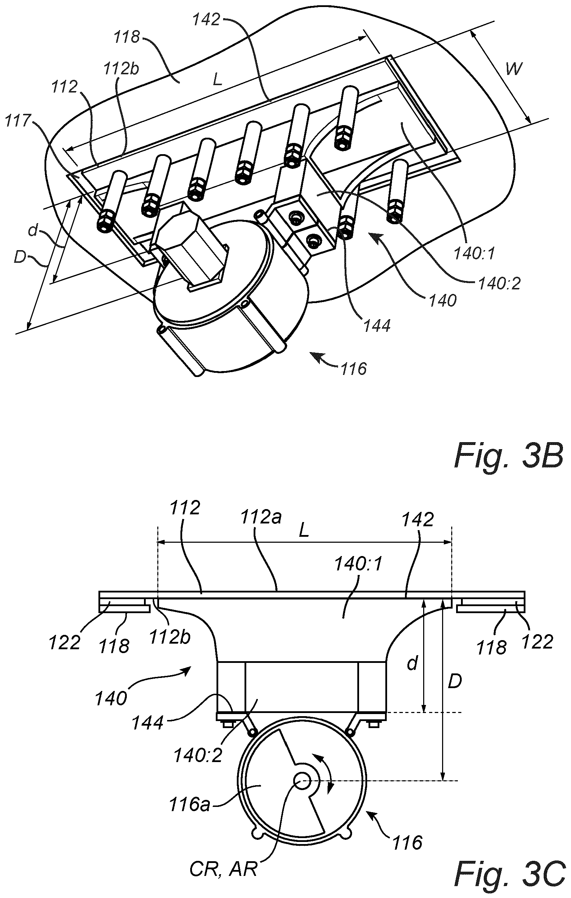

Each depicted rotary vibrator 116, of the four vibrators 116, is connected to a second major surface 112b of the support plate 112 facing away from the bulk material holding space 104. Thus, the second major surface 112b is opposite to the first major surface 112a. Each vibrator 116 is connected to the second major surface 112b of the support plate 112 via a respective bracket 140. The bracket 140 extends through an opening 117. Each vibrator 116 may typically be connected to the bracket 140 by being bolted or welded to the bracket 140. The bracket 140 may typically be connected to the support plate 112 by being welded or screwed to the support plate 112. The design of the bracket 140 as well as the design of the rotary vibrator 116 will be described in greater detail further below with reference to Figs. 3B-C. However, the description of the overall design of the storage and reclaim system 100 will be completed hereinafter before describing the design of the bracket 140 and the design of the rotary vibrator 116.

Thus, the vibrators 116 are all arranged on an underside of the support plate 112, i.e. at the second major surface 112b of the support plate 112. To realize this, each depicted bracket 140 extends through a respective opening 117 in the support structure 114. It is also conceivable that one or more of the brackets 140 extends through a respective slot in the support structure 114. This arrangement of the vibrators 116 brings about that the vibrators are all located outside of the bulk material holding space 104 having. Hence, the presence of the vibrators 116 will not negatively influence how the bulk material 102 is fed towards the discharge port 106.

In the depicted system 100 the support plate 112 is inclined with an angle α of 20 degrees with respect to a horizontal plane. Other angles α within the range of 5-30 degrees with respect to a horizontal plane may be used to advantage. It is currently believed that angles α within the range of 15-25 degrees offers an optimal balance between an efficient gravity induced feeding of the bulk material 102 towards the discharge port 106, and the space saved in the bulk material holding space 104.

By utilizing an angle α of 20 degrees with respect to a horizontal plane a significant amount of valuable space may be saved. Hence, the bulk material holding space 104 may be made larger as compared to when steep sidewalls are used. Owing for instance from the free-floating arrangement of the support plate 112 and the vibrators 116 arranged thereon, the support plate 112 may exhibit a significantly smaller angle α with respect to a horizontal plane while the bulk material 102 may still be fed towards the discharge port 106 in a gravity assisted manner.

Now referring in particular to Figs. 3B and 3C. Fig. 3B illustrates in greater detail how the rotary vibrator 116 is connected to the second major surface 112b of the support plate 112 via the bracket 140. Similarly, Fig. 3C illustrates a cross-sectional view of how the rotary vibrator 116 of Fig. 3B is connected to the second major surface 112b of the support plate 112 via the bracket 140 of Fig. 3B.

As illustrated in Figs. 3A-C, the bracket 140 comprises a support plate mounting surface 142. The support plate mounting surface 142 is attached to the second major surface 112b of the support plate 112. In the depicted design, support plate mounting surface 142 of the bracket 140 is attached to the second major surface 112b of the support plate 112 by being bolted thereto. As best illustrated in Fig. 3B, the support plate mounting surface 142 may be bolted to the second major surface 112b using twelve bolts. However, it is to be understood that any number of bolts or other types of fasteners, such as screws, rivets, pins or similar may be used to advantage. Moreover, the support plate mounting surface 142 may be welded, diffusion bonded, soldered or similar to the second major surface 112b.

Further, as illustrated in Figs. 3A-C, the support plate mounting surface 142 has a length extension L along the second major surface 112b as seen towards the discharge port 106. Thus, support plate mounting surface 142 has a length extension L along a direction being parallel to a principal feeding direction or flow direction of the bulk material 102, when the bulk material 102 is fed towards the discharge port 106.

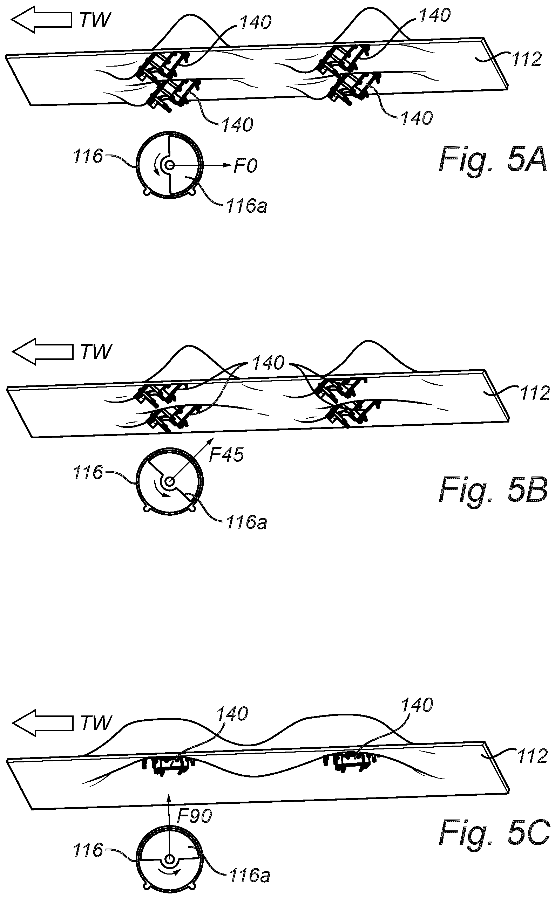

Further, the bracket 140 comprises a vibrator mounting surface 144. The depicted rotary vibrator 116 is attached to the vibrator mounting surface 144. As illustrated in Fig. 3C, the rotary vibrator 116 is attached to the vibrator mounting surface 144 in such a way that a centre of rotation CR of the rotary vibration element 116a of the rotary vibrator 116 is located at distance D from the second major surface 112b in a direction normal to the second major surface 112b. In other words, the centre of rotation CR of the rotary vibration element 116a is located at a minimum distance D from the second major surface 112b. In this regard, it shall be noted that the rotary vibrators 116 may include more than one rotary vibration element 116a. In such a case, a centre of rotation CR of at least one rotary vibration element 116a of the rotary vibrator 116 shall be located at distance D from the second major surface 112b in a direction normal to the second major surface 112b to achieve that vibrations of a significant amplitude are induced in the support plate 112. The characteristics of such vibrations will be described further below while referring to Fig. 5A-E.

As illustrated in Fig. 3C, the rotary vibration element 116a of the rotary vibrator 116 is an unbalanced weight which may be rotated about an axis of rotation AR. Thus, the centre of rotation CR of the rotary vibration element 116a coincides with axis of rotation AR in the sense that the centre of rotation CR of the rotary vibration element 116a lies along the axis of rotation AR.

Further, the depicted rotary vibrators 116 of the system 100 are configured to, in response to being operated, rotate the rotary vibration element 116a about the centre of rotation CR, as indicated by a double arrow in Fig. 3C. Further, the rotary vibrators 116 of the system 100 are configured to, in response to being operated, rotate the rotary vibration element 116a about the centre of rotation CR with a rotational speed of 1500 rpm to 6000 rpm. This means that rotary vibrators 116 of the system 100 are configured to induce vibrations having a frequency in a range of 25 Hz to 100 Hz.

In this regard, the present inventor has after significant experimentation and simulations found that when vibrations having a frequency in the range of 25 Hz to 100 Hz are induced in the support plate 112, a particularly beneficial induction or formation of vibrations in the support plate 112 may be achieved, resulting in that a particularly efficient unloading of bulk material 120 both in terms of unloading speed and in terms of the total amount which may be unloaded may be achieved.

In the depicted system 100 of Fig. 3-4, the length extension L of the support plate mounting surface 142 along the second major surface 112b is 600 mm. Further, in the depicted system 100 of Fig. 3-4, the distance D from the second major surface 112b to the centre of rotation CR is 446 mm. This means that a ratio between the length extension L of the support plate mounting surface 142 and the distance D from the second major surface 112b to the centre of rotation CR is about 1,35 in the depicted system 100. Furthermore, in the depicted system 100 of Fig. 3-4, a width extension W of the support plate mounting surface 142 along the second major surface 112b, in a direction perpendicular to the length extension L of the support plate mounting surface 142 is 200 mm.

However, the dimensions of the support plate mounting surface 142 may be varied to suit certain needs and to promote certain characteristics. Thus, the length extension L of the support plate mounting surface 142 and the width extension W of the support plate mounting surface 142 may be varied to tailor the properties of the bracket 140. As is understood, by varying the length extension L of the support plate mounting surface 142 and the width extension W of the support plate mounting surface 142 the size and shape of the effective contact surface or interaction area between the bracket 140 and the second major surface 112b of the support plate may be adapted. In this way, the interaction between the rotary vibrator 116 and the support plate 112 may be adapted. As a result, it may be adapted how vibrations are induced in the support plate 112 as well as how the support plate 112 is flexed when inducing vibrations therein.

In addition to varying the dimensions of the support plate mounting surface 142, the distance D from the second major surface 112b to the centre of rotation CR may be varied to suit certain needs. Thus, the distance D from the second major surface 112b to the centre of rotation CR may be varied by tailoring the dimensions of the bracket 140.

Further, as illustrated in Figs. 3B-C, the bracket 140 may comprise a first part 140:1 and a second part 140:2. The first part 140:1 and a second part 140:2 may be releasably connected to each other. In the depicted bracket 140, the first part 140:1 and a second part 140:2 are bolted to each other. Further, the first part 140:1 of the depicted bracket 140 comprises the support plate mounting surface 142 and the second part 140:2 comprises the vibrator mounting surface 144. In this way, the bracket 140 may be adapted by combining first parts 140:1 and second parts 140:2 of different designs. For instance, the distance D from the second major surface 112b to the centre of rotation CR may easily be adapted by replacing a second part 140:2 by a second part 140:2 of a different height.

In the following, relevant values for the length extension L, the width extension W, and the distance D from the second major surface 112b to the centre of rotation CR will be discussed. In particular, beneficial ratios and combinations of the length extension L, the width extension W, and the distance D from the second major surface 112b to the centre of rotation CR will be discussed below, all aiming at providing a particularly beneficial induction or formation of vibrations in the support plate 112 such that a particularly efficient unloading of bulk material 120 both in terms of unloading speed and in terms of the total amount which may be unloaded may be achieved. The below values have all been demonstrated to result in a particularly beneficial induction or formation of vibrations in the support plate 112 via significant experimentation and simulations.

Thus, after significant experimentation and simulations, the inventor has found that when the ratio between the length extension L of the support plate mounting surface 142 and the distance D from the second major surface 112b to the centre of rotation CR is in a range of 0,75 to 4,0 a particularly beneficial induction or formation of vibrations in the support plate 112 may be achieved. This means, that when said ratio is in the range of 0,75 to 4,0 a particularly efficient gravity induced feeding of the bulk material 102 towards the discharge port 106 may be realized. Thus, when said ratio is in the range of 0,75 to 4,0 a particularly efficient unloading of bulk material 120 both in terms of unloading speed and in terms of the total amount which may be unloaded may be achieved.

After significant experimentation and simulations, the inventor has found that when the length extension L of the of the support plate mounting surface 142 is in a range of 400 to 1100 mm a particularly beneficial induction or formation of vibrations in the support plate 112 may be achieved. This means, that when the length extension L is in the range of 400 to 1100 mm a particularly efficient gravity induced feeding of the bulk material 102 towards the discharge port 106 may be realized. Thus, when the length extension L is in the range of 400 to 1100 mm a particularly efficient unloading of bulk material 120 both in terms of unloading speed and in terms of the total amount which may be unloaded may be achieved.

It is currently believed that when the length extension L is in a range of 500 to 1000 mm, an optimal balance between efficient gravity induced feeding of the bulk material 102 towards the discharge port 106 and avoidance of material fatigue, primarily due to flexing of the support plate 112, may be realized.

After significant experimentation and simulations, the inventor has found that when the distance D from the second major surface 112b to the centre of rotation CR is in a range of 200 mm to 600 mm, a particularly beneficial induction or formation of vibrations in the support plate 112 may be achieved. This means, that when the distance D from the second major surface 112b to the centre of rotation CR is in the range of 200 mm to 600 mm a particularly efficient gravity induced feeding of the bulk material 102 towards the discharge port 106 may be realized. Thus, when the distance D from the second major surface 112b to the centre of rotation CR is in the range of 200 mm to 600 mm a particularly efficient unloading of bulk material 120 both in terms of unloading speed and in terms of the total amount which may be unloaded may be achieved.

It is currently believed that when the D from the second major surface 112b to the centre of rotation CR is in the range of 250 mm to 400 mm, an optimal balance between efficient gravity induced feeding of the bulk material 102 towards the discharge port 106 and avoidance of material fatigue, primarily due to flexing of the support plate 112, may be realized.

Further, after significant experimentation and simulations, the inventor has found that when the width extension W of the support plate mounting surface 142 along the second major surface 112b, in a direction perpendicular to the length extension L of the support plate mounting surface 142, corresponds to no more than 50 % of the length extension L, a particularly beneficial induction or formation of vibrations in the support plate 112 may be achieved. In other words, the inventor has found that when the width W of the support plate mounting surface 142 does not exceed half its length L, particularly beneficial induction or formation of vibrations in the support plate 112 may be achieved. This means, that when the width extension W of the support plate mounting surface 142 along the second major surface 112b, in a direction perpendicular to the length extension L of the support plate mounting surface 142 does not exceed half the length extension L of the support plate mounting surface 142 a particularly efficient gravity induced feeding of the bulk material 102 towards the discharge port 106 may be realized. Thus, when the width extension W of the support plate mounting surface 142 along the second major surface 112b, in a direction perpendicular to the length extension L of the support plate mounting surface 142 does not exceed half the length extension L of the support plate mounting surface 142 a particularly efficient unloading of bulk material 120 both in terms of unloading speed and in terms of the total amount which may be unloaded may be achieved.

It is currently believed that when the width extension W of the support plate mounting surface 142 along the second major surface 112b, in a direction perpendicular to the length extension L of the support plate mounting surface 142 corresponds to no more than 25-40 % of the length extension L of the support plate mounting surface 142, an optimal balance between efficient gravity induced feeding of the bulk material 102 towards the discharge port 106 and avoidance of material fatigue, primarily due to flexing of the support plate 112, may be realized.

In practice, the width extension W of the support plate mounting surface 142 along the second major surface 112b, in a direction perpendicular to the length extension L of the support plate mounting surface 142 may be in a range of 100 mm to 200 mm to achieve the above discussed particularly beneficial induction or formation of vibrations in the support plate 112.

In practice, when rotary vibrators 116 of a relevant size are used in the depicted system 100 of Fig. 3-4, a distance d from the second major surface 112b, in a direction normal to the second major surface 112b, to the vibrator mounting surface 144 may be in a range of 100 mm to 400 mm, such as 120 mm to 350 mm.

Now also referring to Figs. 5A-E. Figs. 5A-E schematically illustrate a support plate 112 at different instances. More specifically, Figs. 5A-E schematically and qualitatively illustrates the very same support plate 112 when subjected to different forces by four rotary vibrators 116 of the above-described kind via a respective bracket 140 of the above-described kind. The rotary vibrators 116 connected to the brackets 140 have been omitted to more clearly illustrate how vibrations are induced in the support plate 112 and how the support plate 112 flexes during formation of the vibrations. However, the position of the rotary vibration element 116a of each rotary vibrator 116 is schematically illustrated for each one of the Figs. 5A-E. Thus, all four rotary vibrators 116 are in sync. In the following the rotation of the rotary vibration element 116a of a single rotary vibrator 116 will be discussed to make the present disclosure more legible.

Further, Fig. 5A-E are illustrating the how the support plate 112 is flexed or bent at different points of a rotation or duty cycle of the rotary vibration element 116a of the rotary vibrator 116. As is clear from the schematic illustration of the rotary vibrator 116 and its rotary vibration element 116a, Figs. 5A-E are all illustrating how the support plate 112 is flexed or bent at different instances during a half counterclockwise rotation of the rotary vibration element 116a of the rotary vibrator 116. In other words, Figs. 5A-E are all illustrating how the support plate 112 is flexed or bent at different instances during a half duty cycle of the vibrator 116 in which the rotary vibration element 116a exerts a force along the support plate or a force having an upward component in Figs. 5A-E. The reason for not illustrating the other a half of the counterclockwise rotation of the rotary vibration element 116a of the rotary vibrator 116 is simply that when the rotary vibration element 116a exerts a force having a downward component, the support plate will in practice to some degree be pulled downwards towards the backing plate 118 resulting in that the support plate 112 flexes less than during the half duty cycle of the vibrator 116 in which the rotary vibration element 116a exerts a force along the support plate or a force having an upward component, i.e. as illustrated in Figs. 5A-E. It is however to be understood that bending and flexing of the support plate 112 will still occur during the half of the counterclockwise rotation of the rotary vibration element 116a when the rotary vibration element 116a exerts a force having a downward component, although not being illustrated.

It is further to be noted that Figs. 5A-E are illustrated in a way where the flexing of the support plate 112 exaggerated to more clearly illustrate the flexing of the support plate 112 inducing vibrations in the support plate 112. In practice, support plate 112 may flex about 0,5 mm to 4 mm in the upward direction of Figs. 5A-E. in other words, the illustrated peaks in Figs. 5A-E may in practice have a height of about 0,5 - 4 mm. The design amplitude of the depicted system is 1 mm.

In Fig. 5A, the rotary vibration element 116a of the rotary vibrator 116 has its mass centre displaced to the right in the Fig. As a result, the rotary vibrator exerts a force F0 on the bracket having a direction to the right in Fig. 5A, i.e. along the support plate 112. Given the above-described ratio between the length extension L of the support plate mounting surface 142 and the distance D from the second major surface, the rotary vibrator 116 will flex support plate 112 as schematically illustrated. The flexing of the support plate 112 is to a significant degree attributable the fact that the centre of rotation CR of the rotary vibration element 116a of the rotary vibrator 116 is positioned at a relatively speaking large distance D from the support plate in relation to the length extension L by which the rotary vibrator is connected along the support plate 112.

In Fig. 5B, the rotary vibration element 116a of the rotary vibrator 116 has rotated 45 degrees counterclockwise as compared to Fig. 5A. Thus, the mass centre of the rotary vibration element 116a is in Fig. 5B displaced upwards and to the right. As a result, the rotary vibrator 116 exerts a force F45 on the bracket 140 having a direction upwards and to the right in Fig. 5B. Given the above-described ratio between the length extension L of the support plate mounting surface 142 and the distance D from the second major surface, the rotary vibrator 116 will flex support plate 112 as schematically illustrated.

In Fig. 5C, the rotary vibration element 116a of the rotary vibrator 116 has rotated 90 degrees counterclockwise as compared to Fig. 5A. Thus, the mass centre of the rotary vibration element 116a is in Fig. 5C displaced upwards. As a result, the rotary vibrator 116 exerts a force F90 on the bracket 140 having a direction upwards in Fig. 5C. The rotary vibrator 116 will consequently flex support plate 112 as schematically illustrated.

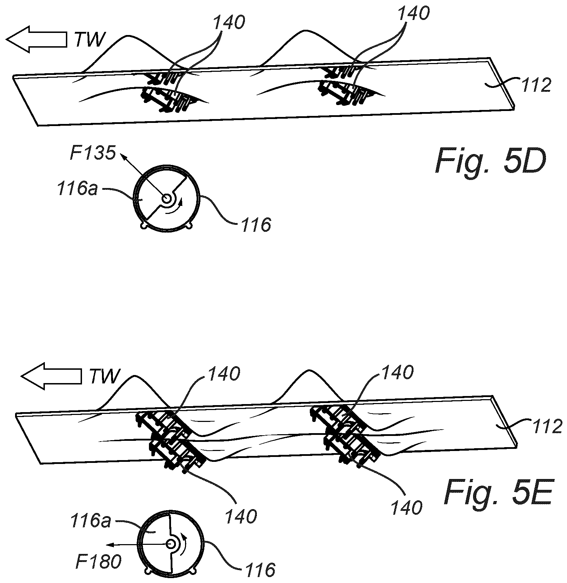

In Fig. 5D, the rotary vibration element 116a of the rotary vibrator 116 has rotated 135 degrees counterclockwise as compared to Fig. 5A. Thus, the mass centre of the rotary vibration element 116a is in Fig. 5D displaced upwards and to the left. As a result, the rotary vibrator 116 exerts a force F135 on the bracket 140 having a direction upwards and to the left in Fig. 5C. Given the above-described ratio between the length extension L of the support plate mounting surface 142 and the distance D from the second major surface, the rotary vibrator 116 will flex support plate 112 as schematically illustrated.

In Fig. 5E, the rotary vibration element 116a of the rotary vibrator 116 has rotated 180 degrees counterclockwise as compared to Fig. 5A. Thus, the mass centre of the rotary vibration element 116a is in Fig. 5C displaced to the left along the support plate 112 in the Fig. As a result, the rotary vibrator 116 exerts a force F180 on the bracket 140 having a direction to the left in Fig. 5C. Given the above-described ratio between the length extension L of the support plate mounting surface 142 and the distance D from the second major surface, the rotary vibrator 116 will flex support plate 112 as schematically illustrated.

When considering Figs. 5A-E jointly, it is clear that a transversal traveling wave TW is induced in the support plate 112 in response to rotating the rotary vibration element 116a about the centre of rotation CR. In other words, by transferring rotational energy of the at least one rotary vibration element 116a to vibrational energy to the support plate 112 via the bracket 140, a transversal traveling wave TW is induced in the support plate 112. As illustrated in Figs. 5A-EE, the transversal traveling wave TW travels to the left as schematically indicated by an arrow.

By inducing a transversal traveling wave TW in the support plate 112 a net feeding of the bulk material 102 may be promoted in the travel direction of the transversal traveling wave TW, i.e. to the left in Figs. 5A-E. However, by inducing a transversal traveling wave TW in the support plate 112 arching and walling of the bulk material 102 may efficiently be counteracted although a direction of the gravity induced feeding of the bulk material 102 towards the discharge port 106 does no correspond to a travel direction of the transversal traveling wave TW in the support plate 112.

In practice, each rotary vibrator 116 and each bracket 140 may locally form a transversal traveling wave TW, in the support plate 112, at the location where the support plate mounting surface 142 of the bracket 140 is attached to the support plate. However, as illustrated in Figs. 5A-E such local transversal traveling waves TW may jointly form a system of transversal traveling waves TW, which in practice may be considered a transversal traveling wave TW.

In practice, by positioning the rotary vibrator 116, such that the rotary vibration element 116a is rotatable about an axis of rotation AR coinciding with the centre of rotation CR, wherein the axis of rotation AR being substantially perpendicular to the length extension L of the support plate mounting surface 142 and being substantially parallel to the second major surface 112b of the support plate 112, a transversal traveling wave TW which travels towards the discharge port 106 may be induced in the support plate 112. In practice, the rotation direction of the rotary vibration element 116a will define the travel direction of the transversal wave TW. Consequently, if a counterclockwise rotation of the rotary vibration element 116a results in a transversal traveling wave TW which travels towards the discharge port 106, a clockwise rotation of the rotary vibration element 116a will result in a transversal traveling wave TW which travels away from the discharge port 106.

As best illustrated in Fig. 4, the discharge port 106 further comprises one or more inclined discharge port plates 124. The discharge port plates 124 are consequently arranged in proximity to, and typically directly by, the discharge port 106. The discharge port plates 124 are used for guiding the bulk material 102 and for assisting gravity induced feeding of the bulk material 102 towards the discharge port 106. As can be seen in e.g. Figs. 3A and 4 the discharge port plates 124 are arranged at a steeper angle than the support plate 112. More specifically, each discharge port plate 124 is inclined with an angle in the range of 30-70 degrees with respect to a horizontal plane. It is to be noted that the discharge port plates 124 may be omitted such that the bulk material may enter the discharge port directly from the support plate 112.

As can be seen in Fig. 4, the depicted discharge port plate 124 is provided with two vibrators 116:1. Any number of vibrators 116:1 may be used to advantage at the discharge port plates 124. Hence, the one or more vibrators 116:1 may consequently be connected to each discharge port plate 124. The vibrators 116:1 are thus configured to transfer vibrational energy to the discharge port plate 124 at hand to induce a vibrational movement of the discharge port plate 124. Further, each discharge port plate 124 may be supported by the support structure 114 in a free-floating manner. By supporting each discharge port plate 124 in a free-floating manner, the same or similar advantages to those discussed in relation to the support plate 112 may be achieved. Those advantages will consequently not be repeated here to avoid undue repetition.

The vibrators 116:1 connected to the discharge port plate 124 may be of a different type as compared to the rotary vibrators 116. For instance, liner vibrators 116:1 may be used to advantage on the discharge port plate 124. Moreover, less powerful vibrators 116:1 may be used on the discharge port plate 124 as compared to on the support plate 112.

The discharge port plates 124 may or may not be provided with vibrators 116:1. Some discharge port plates 124 may be provided with vibrators 116:1 while others not.

The vibrators 116, 116:1 of the system 100 are advantageously independently controllable. It is thus possible to operate each vibrator 116, 116:1 independently of any other vibrator 116, 116:1 in the system 100. It may also be possible to adjust operation parameters of each vibrator 116, 116:1 independently of any other vibrator 116, 116:1 in the system 100. Operation parameters may include an amount of vibrational energy, a frequency, an operation time, an operation pattern to give a few non-limiting examples.

By having independently controllable vibrators 116, 116:1 several advantages may be achieved. It may for instance be possible to control the vibrators 116, 116:1 in a certain pattern to achieve an efficient feeding of the bulk material 102 towards the discharge port 106. A typical pattern may be to start the vibrator or vibrators 116, 116:1 closest to the discharge port 106 first. The concerned vibrators 116, 116:1 may be started first after a spontaneous gravity induced flow of the bulk material 102 has stopped in order to save energy and to not induce vibrations for an unnecessary long time. Vibrators 116, 116:1 located farther away from the discharge port may then be started successively to feed bulk material 102 in an efficient manner along the support plate 112 towards the discharge port 106.

A bulk material level may be monitored in the bulk material holding space 104. The vibrators 116 may be controlled based on the bulk material level in the bulk material holding space 104. Sticking or clogging of bulk material 102 in the bulk material holding space 104 may be monitored. The vibrators 116, 116:1 may be controlled based on bulk material 102 sticking or clogging in the bulk material holding space 104.

Now referring to Fig. 6 here is conceptually depicted a land-based storage 300 comprising a storage and reclaim system 100 of the above-described kind. As can be seen in Fig. 6, the land-based storage 300 includes a number of modules each including two opposite support plates 112 being inclined towards a centrally located discharge port 106. A plurality of modules is arranged after on other in three rows in the depicted land-based storage 300. In other words, the storage and reclaim system 100 includes a plurality of modules each including support plates 112 and a discharge port 106. Moreover, the support palates 112 are provided with rotary vibrators 116. Each rotary vibrator 116 is connected to the second major surface 112b of its associated support plate 112 via a respective bracket 140 as have been described above mainly with reference to Fig. 3B. In this regard reference is made to the above. Further the support plates 112 are supported in a free-floating manner on a support structure 114 as have been described in greater detail with reference to Figs. 2-4. In this regard reference is made to the above. A conveyor 110 is arranged under respective row of discharge ports 106. Hence three conveyors 100 are used in the depicted land-based storage 300. It is to be understood that any number of modules may be arranged in any number of rows when designing a land-based storage 300 including a storage and reclaim system 100 of the above-described kind. Hence, any number of support plates 112, vibrators 116, conveyors 110 etc. may be used to advantage in a land-based storage 300. A land-based storage 300 of the above kind is consequently a self-unloading land-based storage 300.

However, it is to be understood that the storage and reclaim system 100 of the land-based storage 300 may be employed with any of the features discussed in conjunction with the storage and reclaim system 100 discussed in conjunction with Figs. 2-5. These features will not be repeated here in order to avoid undue repetition.

Now referring to Fig. 7 here is conceptually depicted how hoppers 400 are used for unloading a vessel. Each a hopper 400 comprising a storage and reclaim system 100 of the above-described kind. The hopper 400 includes two opposite support plates 112 being inclined towards a centrally located discharge port 106. The support plates 112 are supported by a support structure 114 in a free-floating manner as have been described above in relation to Figs. 2-4. Each support plate 112 is provided with two rotary vibrators 116 of the above-described kind. In other words, a typical hopper 400 includes a bulk material storage space 104 which tapers down towards a discharge port 106.

Bulk material 102 may be stored temporarily in the hopper 400 when for instance handling bulk material 102 at a vessel by means of a grab bucket. When unloading bulk cargo from a vessel as depicted in Fig. 7, a grab bucket may grab bulk material in the cargo hold of the vessel and subsequently drop the bulk material 102 into a hopper 400 located in proximity to the vessel, e.g. on a quay as depicted in Fig. 7.

Alternatively, a hopper 400 or hoppers 400 of the above kind may be located above deck on a vessel.

Conveyors, conveyor belts, transport screws or similar for conveying the bulk cargo from the vessel may typically be arranged below each hopper 400. The conveyors, transport screws or similar may be located at the vessel. The conveyors or similar may be located at a quay or dock.

The grab bucket or grab buckets used to unload the cargo hold of the vessel may be hoisted by a crane located above deck at the vessel itself. The grab bucket or grab buckets used to unload the cargo hold of the vessel may be hoisted by a crane located at a quay, dock, barge or similar.

A hopper 400 of the depicted type may be made significantly lower and hence lighter as compared to prior art hoppers. As an example, the weight of a hopper 400 with a bulk material handling capacity of 50 tonnes per run may be reduced from 90 tonnes to 30 tonnes. A reduced height and weight of the hopper 400 may reduce the roll of the vessel as compared to standard prior art hoppers when the hopper is mounted above deck on the vessel itself.

When the hopper 400 is used in conjunction with a large naval vessel and large cranes, a single grab by a grab bucket may drop 40-50 tonnes of bulk material 102 into the hopper 400. The bulk material 102 may then be stored temporarily or for a prolonged time in the hopper 400. The hopper may for instance be emptied in about 30-40 seconds even if 40-50 tonnes of bulk material 102 has been dropped therein. The hopper may in that case typically be emptied onto a conveyor, transport screws or other transport means.

Moreover, bulk material 102 may be stored for a prolonged time in a hopper 400 when for instance installing the hopper 400 in a storage tower. The discharge port 106 may exit over a conveyor, a transport screw or a cargo hold to give a few non-liming examples.

The storage and reclaim system 100 of the hopper 400 may be employed with any of the features discussed in conjunction with the storage and reclaim system 100 discussed in conjunction with Figs. 2-5. These features will not be repeated here in order to avoid undue repetition.

As have been described in detail above, the storage and reclaim system 100 may be used for a large variety of bulk materials. The storage and reclaim system 100 may for instance be used for handling of bulk materials 102 such as wood chips, wood pellets, sawdust, coal, ore, gypsum rock, bauxite, alumina, cement, sand, gravel, crushed rock, salt, grains and aggregates.

It will be appreciated that the present inventive concept is not limited to the variants and examples shown. Several modifications and variations are thus conceivable within the scope of the invention which thus is defined by the appended claims.

## Claims

1. A storage and reclaim system (100) for bulk material (102) comprising:
a bulk material holding space (104) having a bottom portion (108) provided with a discharge port (106), wherein the bottom portion (108) comprises an inclined support plate (112) for supporting the bulk material (102), at a first major surface (112a) thereof, and for assisting gravity induced feeding of the bulk material (102) towards the discharge port (106),
a support structure supporting (114) the support plate (112), and
one or more rotary vibrators (116) connected to the support plate (112) and configured to transfer vibrational energy to the support plate (112) to induce a vibrational movement of the support plate (112),
wherein the support plate (112) is supported by the support structure (114) in a free-floating manner,
wherein the one or more rotary vibrators (116) are connected to a second major surface (112b) of the support plate (112) via a respective bracket (140), the second major surface (112b) being opposite to the first major support surface (112a) and facing away from the bulk material holding space (104),
wherein the bracket (140) comprises a support plate mounting surface (142) attached to the second major surface (112b) of the support plate (112), the support plate mounting surface (142) having a length extension (L) along the second major surface (112b) as seen towards the discharge port (106),
wherein the bracket (140) comprises a vibrator mounting surface (144) to which the rotary vibrator (116) is attached, whereby a centre of rotation (CR) of at least one rotary vibration element (116a) of the rotary vibrator (116) is located at distance (D) from the second major surface (112b) in a direction normal to the second major surface (112b), and
wherein a ratio between the length extension (L) of the support plate mounting surface (142) and the distance (D) from the second major surface (112b) to the centre of rotation (CR) is in a range of 0,75 to 4,0.

2. The storage and reclaim system (100) according to claim 1, wherein the one or more rotary vibrators (116) are configured to, in response to being operated, rotate the at least one rotary vibration element (116a) about the centre of rotation (CR) thereby transferring rotational energy of the at least one rotary vibration element (116a) to vibrational energy to the support plate (112), via the bracket (140), to induce a transversal traveling wave (TW) in the support plate (112).

3. The storage and reclaim system (100) according to claim 1 or 2, wherein the at least one rotary vibration element (116a) is rotatable about an axis of rotation (AR) coinciding with the centre of rotation (CR), wherein the axis of rotation (AR) being substantially perpendicular to the length extension (L) of the support plate mounting surface (142) and being substantially parallel to the second major surface (112b) of the support plate (112).

4. The storage and reclaim system (100) according to claim 3, when dependent on claim 2, wherein the one or more rotary vibrators (116) are configured to, in response to being operated, rotating the at least one rotary vibration element (116a) about the axis of rotation (AR) such that the transversal traveling wave (TW) travels towards the discharge port (106).

5. The storage and reclaim system (100) according to any one of the preceding claims, wherein the bracket (140) comprises a first part (140:1) and a second part (140:2) releasably connected to each other, wherein the first part (140:1) comprises the support plate mounting surface (142), and wherein the second part (140:2) comprises the vibrator mounting surface (144).

6. The storage and reclaim system (100) according to any one of the preceding claims, wherein the length extension (L) of the of the support plate mounting surface (142) is in a range of 400 to 1100 mm, such as 500 to 1000 mm.

7. The storage and reclaim system (100) according to any one of the preceding claims, wherein a width extension (W) of the support plate mounting surface (142) along the second major surface (112b), in a direction perpendicular to the length extension (L) of the support plate mounting surface (142), corresponds to no more than 50 % of the length extension (L), such as no more than 25-40 % of the length extension (L).

8. The storage and reclaim system (100) according to any one of the preceding claims, wherein the distance (D) from the second major surface (112b) to the centre of rotation (CR) is in a range of 200 mm to 600 mm, such as, 250 mm to 400 mm.

9. The storage and reclaim system (100) according to any one of the preceding claims, wherein a distance (d) from the second major surface (112b), in a direction normal to the second major surface (112b), to the vibrator mounting surface (144) is in a range of 100 mm to 400 mm, such as 120 mm to 350 mm.

10. The storage and reclaim system (100) according to any one of the preceding claims, wherein the one or more rotary vibrators (116) are configured to, in response to being operated, rotate the at least one rotary vibration element (116a) about the centre of rotation (CR) with a rotational speed of 1500 rpm to 6000 rpm.

11. The storage and reclaim system (100) according to any one of the preceding claims, wherein the support plate (112) is inclined with an angle (α) in a range of 5 degrees to 30 degrees, such as 15 degrees to 25 degrees, with respect to a horizontal plane.

12. The storage and reclaim system (100) according to any one of the preceding claims, wherein the support structure (114) comprises a backing plate (118), wherein the support plate (112) rests on the backing plate (118), and wherein each bracket (140) extends through an opening (117) and/or a slot in the backing plate (118).

13. The storage and reclaim system (100) according to any one of the preceding claims, wherein the system (100) further comprises an intermediate layer (122) arranged between the support structure (114) and the support plate (112), the intermediate layer (122) having vibration isolating properties such that transmission of vibrations from the support plate (112) to the support structure (114) is counteracted.

14. The storage and reclaim system (100) according to any one of the preceding claims, wherein the discharge port (106) further comprises one or more inclined discharge port plates (124) for guiding the bulk material (102) and for assisting gravity induced feeding of the bulk material (102) towards the discharge port (106), wherein each discharge port plate (106) is inclined with an angle in a range of 30-70 degrees with respect to a horizontal plane,
wherein one or more vibrators (116:1) are connected to each discharge port plate (124) and configured to transfer vibrational energy to the discharge port plate (124) to induce a vibrational movement of the discharge port plate (124), wherein each discharge port plate (124) is supported by the support structure (114) in a free-floating manner.

15. The storage and reclaim system (100) according to any one of the preceding claims, the system (100) further comprising an additional inclined support plate (112) for supporting the bulk material (102) and for assisting gravity induced feeding of the bulk material (102) towards the discharge port (106) from an opposite side thereof.

16. A vessel (200) comprising a storage and reclaim system according to any one of claims 1-15.

17. A land-based storage (300) comprising a storage and reclaim system (100) according to any one of claims 1-15.

18. A hopper (400) comprising a storage and reclaim system (100) according to any one of claims 1-15.

19. Use of a storage and reclaim system (100) according to any one of claims 1-15 for handling of bulk material (102) chosen from group consisting of: wood chips, wood pellets, sawdust, coal, ore, gypsum rock, bauxite, alumina, cement, sand, gravel, crushed rock, salt, grains and aggregates.
